# EUROPÄISCHE PATENTSCHRIFT

(11) **EP 3 173 820 B1**
(45) Veröffentlichungstag und Bekanntmachung des Hinweises auf die Patenterteilung: **01.05.2019**
(21) Anmeldenummer: 15197008.4
(22) Anmeldetag: 30.11.2015
(51) Int. Cl.: G01S 19/36, H01Q 21/28

(54) **EMPFANGSMODUL, POSITIONSBESTIMMUNGSEINRICHTUNG UND FAHRZEUG MIT POSITIONSBESTIMMUNGSEINRICHTUNG**
RECEIVER MODULE, POSITION DETERMINATION DEVICE AND VEHICLE EQUIPPED WITH POSITION DETERMINATION DEVICE
RÉCEPTEUR, DISPOSITIF DE DÉTERMINATION DE POSITION ET VÉHICULE AVEC DISPOSITIF DE DÉTERMINATION DE POSITION

(43) Veröffentlichungstag der Anmeldung: 31.05.2017
(73) Patentinhaber: Toll Collect GmbH, 10785 Berlin (DE)
(72) Erfinder: König, Tilmar, 15711 Königs Wusterhausen (DE)
(74) Vertreter: adares Patent- und Rechtsanwälte Reininger & Partner GmbB

(56) Entgegenhaltungen:
- WO-A1-02/082119
- DE-A1- 4 142 403
- GB-A- 2 273 218
- US-A- 5 825 327

## Beschreibung

Die Erfindung betrifft ein Empfangsmodul, eine Positionsbestimmungseinrichtung mit einem solchen Empfangsmodul und ein Fahrzeug mit einer solchen Positionsbestimmungseinrichtung.

Positionsbestimmungseinrichtungen werden üblicherweise in mobilen Vorrichtungen, insbesondere in Straßenfahrzeugen aller Art wie Personenkraftfahrzeugen (PKW) oder Lastfahrzeugen (LKW) eingesetzt, um die Position der mobilen Vorrichtung zu Bestimmen und ihre Bewegung auf der Straße verfolgen zu können. In der Regel basiert die Positionsbestimmung hierbei auf Empfang und Auswertung von Funksignalen, welche von Satelliten ausgesendet wurden und Informationen über Satellitenposition und Sendezeitpunkt enthalten. Solche Positionsbestimmungseinrichtungen werden beispielsweise in Navigationssystemen verwendet. Ferner kommen sie in Erfassungssystemen für Mautgebühren zum Einsatz. Hierbei wird anhand des erfassten Bewegungsverlaufs des Fahrzeugs und dessen Vergleich mit entsprechendem mautpflichtige Straßen auszeichnendem digitalen Kartenmaterial die vom Fahrzeughalter zu zahlende Mautgebühr beispielsweise durch eine sogenannte On-Board Unit (OBU) im Fahrzeug ermittelt und mittels Mobilfunk von der OBU an eine zentrale Rechnungsstelle übermittelt. Der Fahrzeughalter erhält dann eine Rechnung über die zu zahlende Mautgebühr zugestellt.

Ein globales Navigationssatellitensystem (GNSS) umfasst eine Vielzahl an Satelliten. Eine in einem Fahrzeug eingebaute Positionsbestimmungseinrichtung, umfasst in der Regel eine am oder im Fahrzeug außerhalb der OBU angebrachte Empfangsantenne sowie ein üblicherweise in die OBU integriertes Positionsbestimmungsmodul. Die Empfangsantenne empfängt von den Satelliten ausgesendete Signale und leitet sie an das Positionsbestimmungsmodul weiter. Das Positionsbestimmungsmodul ist darauf angewiesen, Signale mehrerer Satelliten zu empfangen, um eine präzise Positionsbestimmung durchzuführen. Befindet sich entlang einer Verbindungslinie von der Empfangsantenne zu einem der Satelliten des GNSS ein Fahrzeugelement, dann kann hierdurch eine Abschattung des von diesem Satelliten ausgesendeten Sattelitensignals hervorgerufen werden. In diesem Fall wird das Satellitensignal dieses Satelliten nicht von der Empfangsantenne erfasst und somit in dem Positionsbestimmungsmodul bei der Positionsbestimmung auch nicht berücksichtigt. Die Positionsbestimmung wird dadurch ungenauer.

Ein solches Fahrzeugelement ist insbesondere ein Dachaufbau eines LKWs. Wenn es sich beispielsweise um einen Autotransporter handelt, dessen Anhänger einen Überstand über das Dach des Zugfahrzeuges aufwiest, dann kann dieser Überstand eine am Dach oder an der Windschutzscheibe des Zugfahrzeuges befestigte Empfangsantenne abschatten. Ein anderes Beispiel bietet ein Kühltransporter, dessen Kühlaggregat das abschattende Fahrzeugelement bildet. Das Fahrzeugelement schattet aus Sicht der Empfangsantenne einen Himmelssegment bzw. einen Raumwinkel ab, so dass eine direkte, das heißt geradlinige, Funkstrecke zwischen der Empfangsantenne und einem Satelliten, der sich aus Sicht der Empfangsantenne innerhalb dieses Himmelssegmentes befindet, durch das Fahrzeugelement blockiert ist.

Um auch Signale von sich im abgeschatteten Himmelssegment befindlichen Satelliten empfangen und bei der Positionsbestimmung berücksichtigen zu können, können eine oder mehrere weitere Empfangsantennen vorgesehen sein, welche auf einer der vorangehend genannten Empfangsantenne abgewandten Seite des Fahrzeugelementes angeordnet ist. So wird sichergestellt, dass Signale von Satelliten, welche gegenüber einer ersten Empfangsantenne abgeschattet sind, von einer zweiten Empfangsantenne empfangen und an das Positionsbestimmungsmodul weitergeleitet werden können.

Positionsbestimmungseinrichtungen mit mehreren Empfangsantennen werden beispielsweise in DE 101 25 474 A1 und in EP 2 078 324 B1 offenbart. Diese auch als GPS-Empfänger bekannten Positionsbestimmungseinrichtungen weisen Antennenselektoren wie beispielsweise Weichen auf, welche dafür sorgen, dass nur eine der Empfangsantennen durchgeschaltet wird, so dass nur das mittels dieser Empfangsantenne empfangene Satellitensignal für die Positionsbestimmung berücksichtigt wird. Bei DE 101 25 474 A1 wird diejenige Empfangsantenne mit dem höchsten ermittelten Empfangssignalpegel derart ausgewählt. Ein weiterer GPS-Empfänger mit zwei Empfangsantennen, welche am Fahrzeug zum Signalempfang aus unterschiedlichen Himmelsrichtungen angebracht sind, ist aus der US 5,587,715 A bekannt.

Um die beschriebenen Abschattungsprobleme zu umgehen, müssen die zwei oder mehr Empfangsantennen an unterschiedlichen Orten im Fahrzeug angeordnet sein. Die Signale müssen also mittels Kabel zum Empfänger transportiert werden. Um Signalverluste in den Leitungen von vornherein auszugleichen, werden hierfür aktive Empfangsantennen eingesetzt, welche jeweils einen integrierten Signalverstärker oder Vorverstärker aufweisen. Solche Empfangsantennen sind beispielsweise in WO 02/082119 A1, US5,825,327, DE 41 42 403 A1 und GB 2 273 218 A beschrieben. Die Verwendung mehrerer aktiver Empfangsantennen erhöht jedoch entsprechend den Gesamtenergiebedarf oder den Gesamtstrombedarf, welcher von dem GPS-Empfänger oder der OBU aufgebracht werden muss. Der GPS-Empfänger müsste in diesem Fall für den größeren Verbrauch neu ausgelegt werden.

Darüber hinaus wird bei den bekannten Vorrichtungen aus dem vorangehend zitierten Stand der Technik jeweils nur das Signal einer Empfangsantenne weitergeleitet und somit für die Positionsbestimmung berücksichtigt. Es bleibt also das Problem, dass bestimmte Himmelssegmente aufgrund des Fahrzeugelementes abgeschattet bleiben und die Signale der sich darin befindlichen Satelliten nicht in den Prozess der Positionsbestimmung mit einfließen.

Es ist Aufgabe der Erfindung, eine Positionsbestimmungseinrichtung und ein Fahrzeug mit einer solchen Positionsbestimmungseinrichtung dahingehend weiterzubilden, dass eine Positionsbestimmung mit hoher Genauigkeit und reproduzierbar vorgenommen werden kann, die auch bei Fahrzeugtypen mit großen Dachaufbauten verlässlich funktioniert.

Die Aufgabe wird gemäß der Erfindung durch ein Empfangsmodul mit den Merkmalen des Anspruchs 1, durch eine Positionsbestimmungseinrichtung mit den Merkmalen des Anspruchs 10 und durch ein Fahrzeug mit den Merkmalen des Anspruchs 11 gelöst. Vorteilhafte Weiterbildungen der Erfindung sind in den Unteransprüchen aufgeführt.

Die vorgeschlagene erfindungsgemäße Positionsbestimmungseinrichtung umfasst zumindest zwei Empfangsantennen, das erfindungsgemäße Empfangsmodul und ein Positionsbestimmungsmodul. Die Empfangsantennen empfangen Signale, welche in einem Signalkombinierer des Empfangsmoduls zu einem Gesamtsignal kombiniert und an das Positionsbestimmungsmodul weitergeleitet werden. Das Positionsbestimmungsmodul wiederum wertet das Gesamtsignal aus, um hierauf basierend eine geographische Position der Positionsbestimmungseinrichtung und somit des Fahrzeuges, in dem die Positionsbestimmungseinrichtung installiert ist, zu bestimmen. Das Positionsbestimmungsmodul ist über einen Positionsbestimmungsmodulanschluss mit dem Empfangsmodul verbunden. Über diesen Positionsbestimmungsmodulanschluss wird das Gesamtsignal vom Empfangsmodul an das Positionsbestimmungsmodul weitergeleitet. Über diesen Positionsbestimmungsmodulanschluss stellt aber auch das Positionsbestimmungsmodul einen Versorgungsstrom bereit, welcher hauptsächlich für die Versorgung einer aktiven Empfangsantenne vorgesehen ist.

Das Positionsbestimmungsmodul ist jedoch in der Regel dafür ausgelegt, lediglich eine aktive Empfangsantenne mit Strom zu versorgen. Beispielsweise kann die Empfangsantenne vom Typ GPS925TC der Firma Hirschmann sein. Diese hat als oberen Toleranzwert eine Stromaufnahme von 38 mA. Wenn nun das Positionsbestimmungsmodul einen maximalen Versorgungsstrom von 50 mA bereitstellen kann, dann kann es zu jedem Zeitpunkt nur eine solche Empfangsantenne versorgen. Die Erfindung beruht auf der Überlegung, diesen Versorgungsstrom zeitlich abwechselnd den Empfangsantennen zur Verfügung zu stellen. Hierzu weist das Empfangsmodul einen Umschalter auf, welcher ausgebildet ist, den am Positionsbestimmungsmodulanschluss bereitgestellten Versorgungsstrom in einer ersten Schaltphase über einen ersten Stromversorgungspfad einem ersten Antennenanschluss und in einer zweiten Schaltphase über einen zweiten Stromversorgungspfad einem zweiten Antennenanschluss zur Verfügung zu stellen. In der erfindungsgemäßen Positionsbestimmungseinrichtung sind die erste Empfangsantenne am ersten Antennenanschluss und die zweite Empfangsantenne am zweiten Antennenanschluss angeschlossen.

Das Empfangsmodul weist weiterhin elektrische Speicher auf, welche jeweils in den ersten und zweiten Stromversorgungspfaden angeordnet und ausgebildet sind, zumindest in der ersten Schaltphase wenigstens dem zweiten Antennenanschluss Strom bereitzustellen und zumindest in der zweiten Schaltphase wenigstens dem ersten Antennenanschluss Strom bereitzustellen.

Es können neben der ersten und der zweiten Empfangsantenne noch weitere, insbesondere eine dritte und eine vierte und mehr, Empfangsantennen vorgesehen sein, die jeweils am Empfangsmodul einen eigenen Antenennanschluss aufweisen können. In diesem Fall kann der Versorgungsstrom in beliebiger Reihenfolge den Empfangsantennen zur Verfügung gestellt werden, wobei auch hier zu jeder Zeit immer nur eine der Empfangsantennen mit dem Versorgungsstrom versorgt wird. Das Empfangsmodul weist entsprechend weitere Stromversorgungspfade auf. Vorteilhafterweise wird der Versorgungstrom in dieser Ausführungsform zyklisch an die Empfangsantennen verteilt. Es können jedoch auch komplexere zeitliche Abfolgen der Strombereitstellung vorgesehen sein.

Bei dem globalen Navigationssatellitensystem kann es sich insbesondere um das Globale Positioniersystem (GPS - "global positioning system") handeln. In jedem Fall werden von mehreren Satelliten Navigationssatellitensignale ausgesendet. Die erste und die zweite Empfangsantenne empfangen die von mehreren Satelliten ausgesendeten Signale. Die erste Empfangsantenne leitet dann ein erstes Signal über den ersten Antennenanschluss an das Empfangsmodul weiter, während die zweite Empfangsantenne entsprechend ein zweites Signal über den zweiten Antennenanschluss an das Empfangsmodul weiterleitet. Bei dem ersten Signal kann es sich um ein bereits verstärktes und/oder gefiltertes Signal handeln, insbesondere dann, wenn die erste Empfangsantenne eine aktive erste Empfangsantenne ist und somit einen integrierten Verstärker aufweist. Entsprechendes gilt für das von der zweiten Empfangsantenne stammende zweite Signal.

Ein Aspekt der Erfindung umfasst lediglich das Empfangsmodul für eine Positionsbestimmungseinrichtung. Dieses ist dazu ausgelegt, zwischen den Empfangsantennen und dem Positionsbestimmungsmodul eingesetzt zu werden und bildet somit die erfindungswesentliche Komponente einer Positionsbestimmungseinrichtung. Vorzugsweise ist das Empfangsmodul in einem eigenen Gehäuse untergebracht. An die Antennenanschlüsse können Empfangsantennen angeschlossen werden. Vorzugsweise sind hierfür Koaxialanschlüsse vorgesehen, welche über Koaxialkabel zu den Empfangsantennen führen. Der Positionsbestimmungsmodulanschluss ist vorzugsweise mit einem Antenneneingang des Positionsbestimmungsmoduls verbunden. Auch der Positionsbestimmungsmodulanschluss kann vorzugsweise als Koaxialanschluss ausgebildet sein.

In einem weiteren Aspekt der Erfindung ist die Positionsbestimmungseinrichtung vorgesehen, welche das Empfangsmodul, die eingangsseitig mit dem Empfangsmodul verbundenen mindestens zwei Empfangsantennen und das ausgangsseitig mit dem Empfangsmodul verbundene Positionsbestimmungsmodul umfasst. Die Positionsbestimmungseinrichtung kann in einem Fahrzeug installiert sein. Insbesondere handelt es sich um ein Fahrzeug, beispielsweise um einen Personenkraftwagen (PKW) aber insbesondere um einen Lastkraftwagen (LKW), mit einem Fahrzeugelement, welches dazu geeignet ist, den räumlichen Empfangsbereich zumindest einer der Empfangsantennen einzuschränken. Die erste und die zweite Empfangsantenne sind derart am Fahrzeug angeordnet, dass sich das Fahrzeugelement zumindest abschnittsweise zwischen der ersten Empfangsantenne und der zweiten Empfangsantenne befindet, und zwar vorzugsweise so, dass ein Himmelssegment, welches aus Sicht der ersten Empfangsantenne durch das Fahrzeugelement abgeschattet wird, für die zweite Empfangsantenne frei, also nicht durch das Fahrzeugelement abgeschattet ist.

Die Bezeichnung "zwischen" ist dabei hier - wie auch im folgenden - auf den Bereich zu beziehen, der sich in alle Richtungen senkrecht zu einer gedachten Verbindungslinie von der ersten Empfangsantenne zu der zweiten Empfangsantenne erstreckt.

Bevorzugterweise sind die beiden Empfangsantennen an voneinander abgewandten Seiten des Fahrzeugelementes angeordnet, vorzugsweise an gegenüber liegenden Enden des Fahrzeugelementes. Besonders bevorzugt sind die zwei oder mehr Empfangsantennen so am und/oder im Fahrzeug angeordnet, dass vom Fahrzeug aus gesehen ein Großteil des Himmels oder der gesamte Himmel von den Empfangsantennen empfangstechnisch abgedeckt ist. Anders ausgedrückt, ergänzen sich die von den Empfangsantennen abgedeckten Himmelsegmente. Hierbei können sich Empfangsbereiche zweier Empfangsantennen berühren oder überlappen. Vorzugsweise decken die nicht durch das Fahrzeugelement und/oder nicht durch irgendeinen Teil des Fahrzeugs abgeschatteten Empfangsbereiche der Empfangsantennen insgesamt einen Raumwinkelbereich von mindestens 95%, 90%, 80% oder 75% der oberhalb einer Straßenebene liegenden Himmelshalbkugel ab.

Die Empfangsantennen sind vorzugsweise derart am und/oder im Fahrzeug angeordnet, dass sich das den räumlichen Empfangsbereich der ersten Empfangsantenne und/oder der zweiten Empfangsantenne einschränkende Fahrzeugelement zumindest abschnittsweise zwischen der ersten Empfangsantenne und der zweiten Empfangsantenne befindet. Hierdurch wird die Einschränkung des Empfangsbereiches der einen Empfangsantenne mithilfe der anderen Empfangsantenne zumindest zum Teil oder sogar vollständig ausgeglichen.

Besonders bevorzugt ist das Fahrzeugelement vollständig zwischen der ersten und der zweiten Empfangsantenne angeordnet. Die erste und die zweite Empfangsantennen können jeweils vorne und hinten an einem Fahrzeugdach und/oder rechts und links des Fahrzeugdaches angeordnet sein. Bevorzugt sind beide Empfangsantennen vorne am Fahrzeugdach an gegenüberliegenden Ecken angeordnet, also rechts und links. Bei dem Fahrzeugteil handelt es sich insbesondere um einen Metall umfassenden oder metallischen Abschnitt des Fahrzeugs. Vorzugsweise ist das Fahrzeugteil Teil eines Anhängers des Fahrzeugs, beispielswiese ein Überstand des Anhängers über das Dach eines Zugfahrzeugs. Es kann sich jedoch bei dem Fahrzeug auch um ein Kühlaggregat eines Kühltransporters handeln.

Das Gesamtsignal, welches aus dem ersten Signal und dem zweiten Signal zusammengesetzt wird, wird an das Positionsbestimmungsmodul weitergeleitet und dort der geographischen Positionsbestimmung zugrunde gelegt. Bei einem Navigationssystem können die hierdurch ermittelten geographischen Positionsdaten dann der Navigation zugrunde gelegt werden. Bei einem Mauterfassungssystem dagegen werden die so ermittelten Positionsdaten für die Berechnung der Mautgebühren herangezogen.

Dass am Positionsbestimmungsmodulanschluss ein Versorgungsstrom bereitgestellt wird, insbesondere dass das Positionsbestimmungsmodul am Positionsbestimmungsmodulanschluss einen Versorgungsstrom bereitstellt, bedeutet, dass am Positionsbestimmungsmodulanschluss ein Strom mindestens in Höhe eines Versorgungsstroms entnommen werden kann, der dem von der Empfangsantenne benötigten Strom entspricht. Notwendigerweise kann am Positionsbestimmungsmodulanschluss jedoch mehr als der von einer einzelnen Empfangsantenne benötigte Versorgungsstrom bereitgestellt werden, jedoch möglicherweise nicht eine ausreichende Menge Strom, um zwei oder mehr Empfangsantennen zu versorgen. Ein über dem von der Empfangsantenne benötigten Versorgungsstrom hinausgehender, am Positionsbestimmungsmodulanschluss bereitgestellter Reservestrom dient der Deckung des Strombedarfs der Bauelemente des Empfangsmoduls, insbesondere des Umschalters und/oder des Signalkombinierers. Bei dem vorangehend angeführten Beispiel einer Kombination aus der Empfangsantenne mit einer Stromaufnahme von 38 mA und dem Positionsbestimmungsmodul mit einem maximalen Laststrom von 50 mA würden 12 mA als Reservestrom zur Verfügung stehen.

In diesem Sinne kann davon gesprochen werden, dass ein überwiegender Anteil (d. h. mehr als 50%) eines vom Positionsbestimmungsmodul am Positionsbestimmungsmodulanschluss bereitgestellten Gesamtversorgungsstromes durch den Umschalter in der ersten Schaltphase dem ersten Antennenanschluss und in der zweiten Schaltphase dem zweiten Antennenanschluss bereitgestellt wird. Das Empfangsmodul und seine Bauteile selbst benötigen einen sehr geringen Anteil des Gesamtversorgungsstromes. Jedenfalls ist es vorteilhaft, wenn das Empfangsmodul derart ausgelegt ist, dass sein Strombedarf geringer ist, als ein Differenzstrom zwischen der Gleichstrombelastbarkeit des Positionsbestimmungsmoduls und dem Strombedarf der Empfangsantenne.

Der Versorgungsstrom fließt vom Positionsbestimmungsmodulanschluss zu den Antenennanschlüssen, während die Signale in umgekehrter Richtung von den Antennenanschlüssen zu dem Positionsbestimmungsmodulanschluss fließen oder geleitet werden. Gemäß einer bevorzugten Ausführungsform weist das Empfangsmodul ein mit dem ersten Antennenanschluss verbundenes erstes Eingangs-Trennelement und ein mit dem zweiten Antennenanschluss verbundenes zweites Eingangs-Trennelement, sowie ein mit dem Positionsbestimmungsmodulanschluss verbundenes Ausgangs-Trennelement auf. Diese sind so ausgebildet und im Empfangsmodul angeordnet, dass sie die mindestens zwei Stromversorgungspfade und zwei Signalpfade ausbilden oder erzeugen. Der erste Stromversorgungspfad leitet während der ersten Schaltphase Versorgungsstrom von dem Positionsbestimmungsmodulanschluss über den Umschalter zu dem ersten Antennenanschluss, und somit zu der ersten Empfangsantenne.

Man kann aber auch von einem Stromversorgungspfad und einem Signalpfad sprechen, die entsprechend der Anzahl an Empfangsantennen verzweigt sind.
Dementsprechend leitet der zweite Stromversorgungspfad während der zweiten Schaltphase Versorgungsstrom von dem Positionsbestimmungsmodulanschluss über den Umschalter zu dem zweiten Antennenanschluss, und somit zu der zweiten Empfangsantenne. Die unterschiedlichen Pfade sind insbesondere jeweils mittels elektrischen Leitungen verwirklicht.

Die Trennelemente sorgen also für eine Trennung der Stromversorgung der Empfangsantennen von den Signalen, welche die Empfangsantennen liefern. Der Umschalter befindet sich im Stromversorgungspfad und beeinflusst auf direktem Wege nur die Stromversorgung der Empfangsantennen. Demgegenüber ist der Signalkombinierer im Signalpfad angeordnet und hat daher auf die Stromversorgung der Empfangsantennen keinen Einfluss. Es ist hier entsprechend der Anzahl der Empfangsantennen von einer Mehrzahl an Stromversorgungspfaden und von einer Mehrzahl an Signalpfaden die Rede. Werden die Pfade mittels elektrischen Leitungen verwirklicht, dann bedeutet das in beiden Fällen, dass es eine Leitung für den Versorgungsstrom von dem Positionsbestimmungsmodulanschluss zu dem Umschalter gibt, während am anderen Ende des Umschalters zwei oder mehr Leitungen jeweils zu einem der Antennenanschlüsse führen.

Eines, mehrere der oder vorzugsweise alle im Empfangsmodul eingesetzten Trennelemente sind vorzugsweise als Bias-Tee ausgebildet. Bevorzugterweise sind die Versorgungspfade als Gleichstrompfade ausgebildet, während die Signalpfade als Hochfrequenzpfade ausgebildet sind. Dies kann insbesondere mittels Hochpassfiltern und/oder Tiefpassfiltern mit geeigneten Schwellfrequenzen erreicht werden. Vorzugsweise wird jedes der Trennelemente mittels eines kapazitiven und eines induktiven Bauelements verwirklicht, insbesondere mittels eines Kondensators und einer Spule.

Der Umschalter kann vorzugsweise ein Relais aufweisen. Bevorzugter handelt es sich jedoch um einen elektronischen Umschalter, der insbesondere aus Halbleiterbauelementen aufgebaut ist. Zweckmäßigerweise handelt es sich um ein einzelnes, in einem Gehäuse untergebrachtes Bauelement, insbesondere um einen integrierten Schaltkreis. Wenn genau zwei Empfangsantennen und dementsprechend genau zwei Antennenanschlüsse vorgesehen sind, dann ist der Umschalter vorzugsweise als Flip-Flop ausgebildet, welcher zwei Ausgänge und einen Eingang aufweist und zu jeder Zeit nur einen der Ausgänge zu dem Eingang durchschaltet. Da der Umschalter den Fluss des Versorgungsstromes von dem Positionsbestimmungsmodul zu den Empfangsantennen steuert, werden, anders als bei den übrigen Komponenten der Positionsbestimmungseinrichtung, sein Positionsbestimmungsmodul-seitiger Anschluss als Eingang und seine Antennen-seitigen Anschlüsse als Ausgänge bezeichnet.

Der Umschalter ist vorzugsweise ausgebildet, oder wird so angesteuert, dass die erste und die zweite Schaltphase im Wesentlichen gleich lang sind. Vorzugsweise liegt das Verhältnis der Zeitdauern der ersten und der zweiten Schaltphase in einem Bereich von 70% bis 130%, vorzugsweise von 85% und 110%. Bevorzugterweise schaltet der Umschalter mit einer vorgegebenen Wechselfrequenz den Versorgungsstrom zwischen den beiden Empfangsantennen um. Die Wechselfrequenz liegt vorzugsweise zwischen 0,1 Hz und 200 Hz, bevorzugterweise zwischen 0,2 Hz und 150 Hz, eher bevorzugt zwischen 0,5 Hz und 100 Hz.

Die Empfangsantennen empfangen Navigationssatellitensignale und leiten diese als erste und zweite Signale, gegebenenfalls verstärkt und/oder aufbereitet über die entsprechenden Antennenanschlüsse an das Empfangsmodul. Indem der Umschalter in der ersten Schaltphase den Versorgungsstrom der ersten Empfangsantenne bereitstellt, und somit die zweite Empfangsantenne während der ersten Schaltphase keinen Versorgungstrom erhält, wird während der ersten Schaltphase auch nur das erste Signal an den Signalkombinierer geleitet. Während dieser ersten Schaltphase ist das zweite Signal im Wesentlichen Null. Eine aktive Empfangsantenne erzeugt ohne ausreichende Stromversorgung kein Signal oder jedenfalls im Vergleich zu einer ausreichend bestromten Empfangsantenne kein nennenswertes Signal. Entsprechendes gilt für die zweite Schaltphase des Umschalters, innerhalb der nur das zweite Signal von der zweiten Empfangsantenne am Signalkombinierer anliegt. Die beiden Signale liegen an zwei unterschiedlichen Eingängen des Signalkombinierers an.

Da das erste Signal und das zweite Signal also nur abwechselnd und nicht gleichzeitig einen signifikanten Wert oder relevante Informationen tragen, können sie mittels eines Signalkombinierers zusammengefügt werden, welcher einen Signalsummierer umfasst oder als Signalsummierer ausgebildet ist.

Der Signalkombinierer kann vorzugsweise ausgebildet sein, das Gesamtsignal derart zu erzeugen, dass in dem Gesamtsignal aufeinanderfolgende Zeitabschnitte abwechselnd jeweils nur entweder das erste Signal oder das zweite Signal enthalten. Das Gesamtsignal, welches der Signalkombinierer erzeugt und welches am Positionsbestimmungsmodulanschluss ausgegeben wird, ist also beispielsweise während der ersten Schaltphase das erste Signal und während der zweiten Schaltphase das zweite Signal, wobei jedoch eventuelle Signalverzögerungen, Stauchungen und/oder Streckungen mit zu berücksichtigen sind.

Gemäß einer alternativen Ausführungsform ist der Signalkombinierer ausgebildet, das Gesamtsignal derart zu erzeugen, dass das Gesamtsignal in einem Zeitabschnitt eine Summe aus dem ersten Signal und dem zweiten Signal enthält. Das bedeutet, dass das erste und das zweite Signal sich nicht wie vorangehend beschrieben zeitlich abwechselnd im Gesamtsignal aneinander reihen, sondern summarisch überlagert sind. Insbesondere kann das Gesamtsignal derart aus den beiden Signalen erzeugt werden, dass zu jedem Zeitpunkt entweder gar keines der Signale im Gesamtsignal vorliegt oder beide Signale übereinander gelagert im Gesamtsignal vorliegen. In diesem Fall müssen das erste und/oder das zweite Signal gestreckt, zeitlich versetzt und/oder gedoppelt werden, damit sie sich zeitlich überlagern lassen, beispielsweise mittels einer Summenbildung.

Beispielsweise kann das erste Signal Abschnitte von Navigationssatellitensignalen dreier Satelliten enthalten, nämlich der Satelliten 1, 2 und 3, während das zweite Signal Abschnitte von Navigationssatellitensignalen dreier weiterer Satelliten enthält, nämlich der Satelliten 4, 5 und 6. In diesem Fall enthält das Gesamtsignal, welches zeitlich abwechselnd aus dem ersten und dem zweiten Signal gebildet ist, zu jedem Zeitpunkt Navigationssatellitensignale von nur drei der sechs Satelliten, nämlich von den Satelliten 1, 2 und 3 oder von den Satelliten 4, 5 und 6. Im Gegensatz dazu würde bei diesem Beispiel ein Gesamtsignal, welches das erste und das zweite Signal überlagert aufweist, zu jedem Zeitpunkt Navigationssatellitensignale aller sechs Satelliten enthalten.

Das Empfangsmodul weist elektrische Speicher auf, welche jeweils in den ersten und zweiten Stromversorgungspfaden angeordnet und ausgebildet sind, zumindest in der ersten Schaltphase wenigstens dem zweiten Antennenanschluss Strom bereitzustellen und zumindest in der zweiten Schaltphase wenigstens dem ersten Antennenanschluss Strom bereitzustellen. Anders ausgedrückt, ist in dem ersten Stromversorgungspfad ein erster elektrischer Speicher angeordnet. Während eines Teils der zweiten Schaltphase oder während der gesamten zweiten Schaltphase, während der die erste Empfangsantenne nicht vom Umschalter mit Strom versorgt wird, erhält sie Strom vom ersten elektrischen Speicher. Dementsprechend erhält die zweite Empfangsantenne während eines Teils der ersten Schaltphase oder während der gesamten ersten Schaltphase, während der die zweite Empfangsantenne nicht vom Umschalter mit Strom versorgt wird, Strom vom zweiten elektrischen Speicher, der in dem zweiten Stromversorgungspfad angeordnet ist.

Vorzugsweise sind die elektrischen Speicher ausgebildet und in dem Empfangsmodul derart angeordnet, dass sie während des Einsatzes des Empfangsmoduls aufgeladen werden. Insbesondere kann der erste elektrische Speicher derart ausgebildet und in dem Empfangsmodul derart angeordnet sein, dass er während der ersten Schaltphase geladen wird, während gleichzeitig die erste Empfangsantenne mit Strom versorgt wird. In diesem Fall muss also am Positionsbestimmungsmodulanschluss ein Strom bereitgestellt werden, welcher zumindest aus einer Summe aus dem für den Betrieb der ersten Empfangsantenne notwendigen Versorgungsstrom und dem Ladestrom zum Laden des ersten Speichers besteht. Dementsprechend kann der zweite elektrische Speicher ausgebildet und im Empfangsmodul angeordnet sein. Der erste und/oder der zweite elektrische Speicher kann insbesondere ein Pufferkondensator sein. Ein zusätzlich in Serie angeordneter Widerstand kann zudem vorgesehen sein, um Stromspitzen beim Aufladen des Pufferkondensators zu vermeiden.

Indem die jeweils nicht über den Umschalter versorgte Empfangsantenne durch einen der elektrischen Speicher mit Strom versorgt wird, wird der Zeitraum verlängert, während dessen am Signalkombinierer das zugehörige Signal anliegt. Dies führt dazu, dass das erste und das zweite Signal sich teilweise überlappen.

Die Erfindung wird im Folgenden anhand von Ausführungsbeispielen unter Bezugnahme auf die Figuren erläutert. Hierbei zeigen:
- Fig. 1: ein Fahrzeug mit einer eingebauten Positionsbestimmungseinrichtung;
- Fig. 2: ein schematisches Diagramm der Positionsbestimmungseinrichtung aus Fig. 1 gemäß einer bevorzugten Ausführungsform;
- Fig. 3a: ein schematisches Schaltdiagramm eines Empfangsmoduls gemäß einer ersten Ausführungsform;
- Fig. 3b: Signaldiagramme zur Veranschaulichung der Funktionsweise einer im Empfangsmodul gemäß Fig. 3a durchgeführten Signalkombinierung;
- Fig. 4a: ein schematisches Schaltdiagramm eines Empfangsmoduls gemäß einer zweiten Ausführungsform; und
- Fig. 4b: Signaldiagramme zur Veranschaulichung der Funktionsweise einer im Empfangsmodul gemäß Fig. 4a durchgeführten Signalkombinierung.

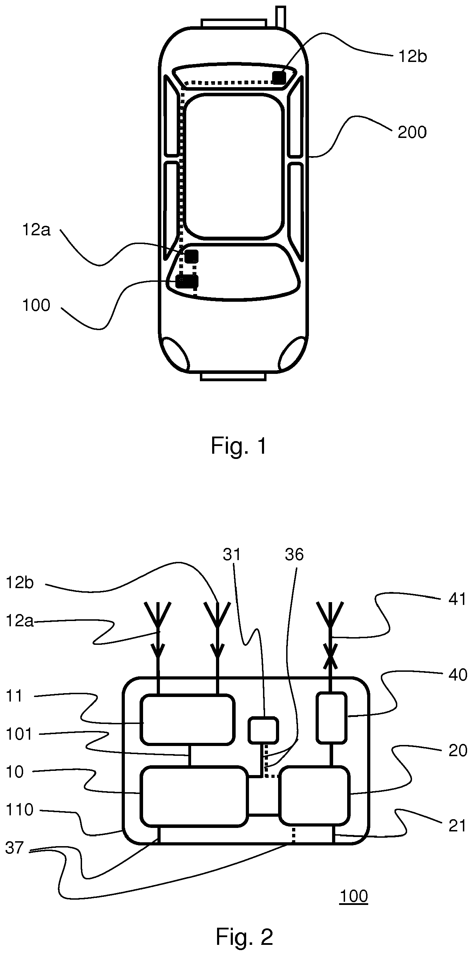

In der Fig. 1 wird ein Fahrzeug 200 in einer Draufsicht dargestellt. Es handelt sich hierbei um einen Personenkraftfahrzeug (PKW). In einem vorderen Bereich des Fahrzeugs 200, im Bereich des Armaturenbretts, ist eine On-Board Unit 110 (OBU) angeordnet. Die OBU 110 ist mit einer ersten GNSS-Signal-Empfangsantenne 12a (kurz: erste Empfangsantenne 12a), welche ebenfalls im vorderen Teil des Fahrzeugs 200 an der Windschutzscheibe angeordnet ist, und einer zweiten GNSS-Signal-Empfangsantenne 12b (kurz: zweite Empfangsantenne 12b) verbunden, welche am hinteren Teil des Fahrzeugs 200 an der Heckscheibe angeordnet ist.

Die Fig. 2 zeigt eine schematische Darstellung einer Positionsbestimmungseinrichtung 100, die die On-board Unit (OBU) 110 umfasst, welche über Anschlüsse mit der ersten Empfangsantenne 12a, der zweiten Empfangsantenne 12b und mit einer Mobilfunk-Antenne 41 der Positionsbestimmungseinrichtung 100 verbunden ist. Die beiden Empfangsantennen 12a, 12b sind als aktive Antennen zum Empfang von Navigationssatellitensignalen (GNSS-Signalen) ausgebildet.

In der OBU 110 sind unterschiedliche Funktionsmodule untergebracht, welche nachfolgend erläutert werden. Ein GNSS-Signal-Empfangsmodul 11 (kurz: Empfangsmodul 11) übernimmt die von den beiden Empfangsantennen 12a, 12b gelieferten Signale und führt sie zu einem Gesamtsignal zusammen. Dieses Gesamtsignal wird über den Positionsbestimmungsmodulanschluss 101 an ein GNSS-Positionsbestimmungsmodul 10 (kurz: Positionsbestimmungsmodul 10) geleitet, welches das erhaltene Gesamtsignal auswertet und als Ergebnis eine geographische Position des Fahrzeugs 200 ermittelt.
Alternativ, jedoch nicht dargestellt, kann das Empfangsmodul 11 außerhalb der OBU 110 angeordnet sein.

Die OBU 100 weist einen Prozessor 20 auf, welcher für die Steuerung des Positionsbestimmungsmoduls 10 zuständig ist und von dem Positionsbestimmungsmodul 10 aus den empfangenen GNSS-Signalen bestimmte geographische Positionen empfängt. Ein wahlweise mit dem Positionsbestimmungsmodul 10 oder dem Prozessor 20 verbundener Beschleunigungssensor 31 (beispielsweise ein Gyroskop) liefert Messinformationen über Richtungsänderungen des Fahrzeugs 200, welche zusammen mit Messinformationen über einen zurückgelegten Weg, die von einem nicht dargestellten Weggeber (beispielsweise ein Tachograph) über Anschlüsse 37 ebenso wahlweise dem Positionsbestimmungsmodul 10 oder dem Prozessor 20 zur Verfügung gestellt werden, bei der Positionsbestimmung ebenfalls berücksichtigt werden können, um im Rahmen einer Koppelortung die Positionsbestimmung zu verbessern. Der Prozessor 20 ist ferner mit einer Mobilfunk-Kommunikationseinheit 40 verbunden, welche über eine Mobilfunk-Antenne 41 eine Kommunikation über das Mobilfunknetz erlaubt. Beispielsweise kann der Prozessor 20 so die zusammengestellten Positionsdaten oder die darauf basierend errechneten Mautgebühren mit einem externen Zentralrechner austauschen.

Schließlich weist die in Fig. 2 dargestellte OBU 110 einen Stromversorgungsanschluss 21 auf, mit dem die unterschiedlichen Komponenten des OBU 110 mit Strom versorgt werden. Wie nachfolgend erläutert wird, erfolgt die Versorgung der beiden Empfangsantennen 12a, 12b über das Positionsbestimmungsmodul 10 durch das Empfangsmodul 11 hindurch.

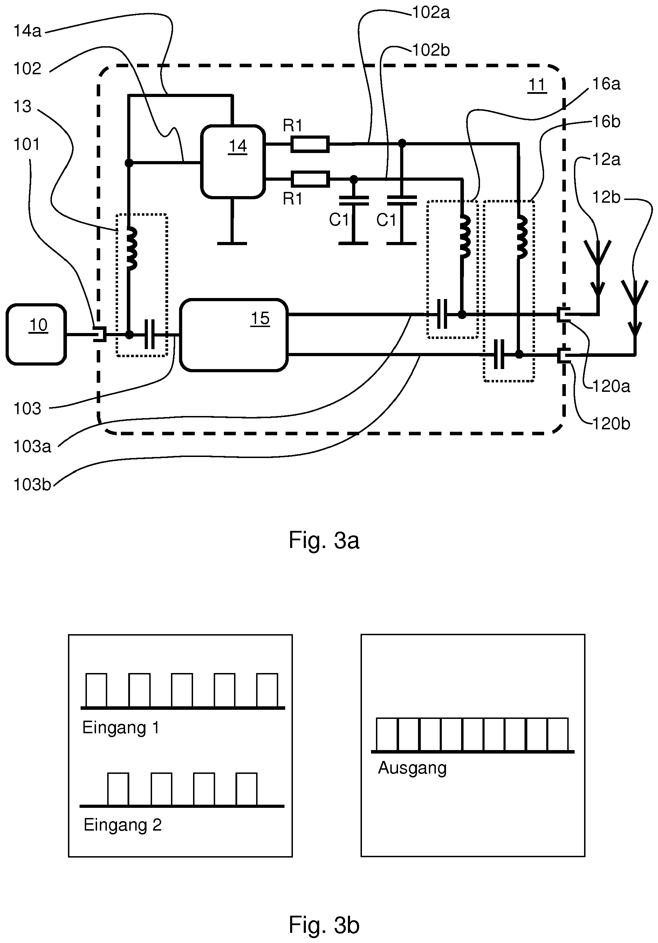

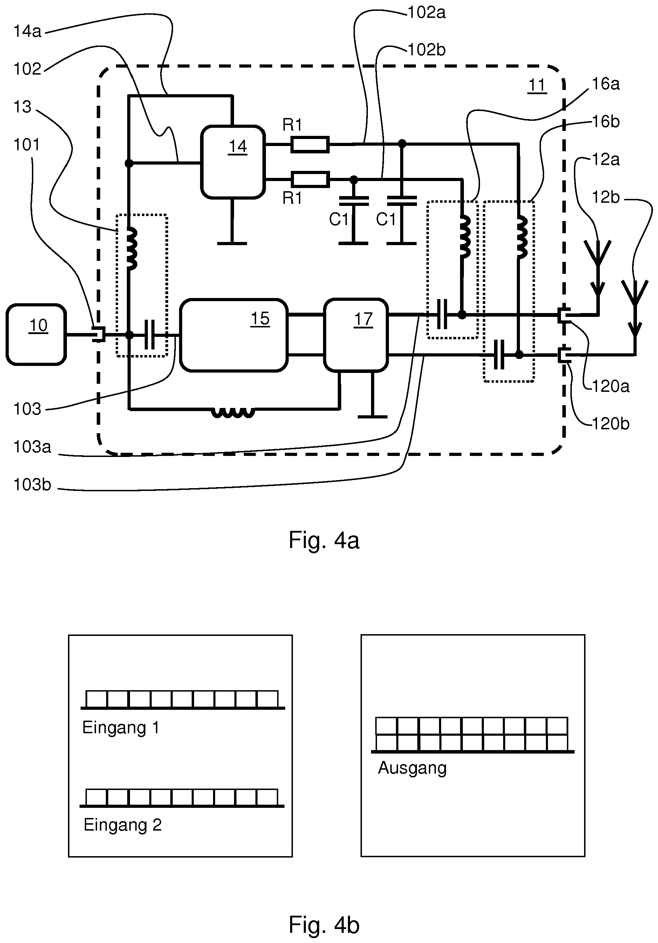

Der Aufbau und die Funktionsweise des Empfangsmoduls 11 aus der Fig. 2 werden nachfolgend anhand der Fig. 3a und 3b sowie alternativ dazu anhand der Fig. 4a und 4b erläutert. Hierbei zeigt die Fig. 3a den Aufbau eines Empfangsmoduls 11 gemäß einer ersten bevorzugten Ausführungsform. Das Empfangsmodul 11 weist drei Anschlüsse auf, nämlich eingangsseitig einen ersten Antennenanschluss 120a und einen zweiten Antennenanschluss 120b, sowie ausgangsseitig einen Positionsbestimmungsmodulanschluss 101. Das Empfangsmodul 11 kann in dieser Form mit den genannten drei Anschlüssen 120a, 120b und 101 hergestellt und vorzugsweise in einem eigenen Gehäuse eingebaut und verkauft werden. Gegebenenfalls können weitere Antennenanschlüsse für weitere Empfangsantennen vorgesehen sein.

Vorliegend sind auch die an dem ersten Antennenanschluss 120a angeschlossene erste Empfangsantenne 12a, die an dem zweiten Antennenanschluss 120b angeschlossene zweite Empfangsantenne 12b und das an dem Positionsbestimmungsmodulanschluss 101 angeschlossene Positionsbestimmungsmodul 10 schematisch dargestellt.

In dem Empfangsmodul 11 sind Trennelemente 13, 16a, 16b vorgesehen, welche die elektrischen Pfade zwischen den Antennenanschlüssen 12a, 12b und dem Positionsbestimmungsmodulanschluss 101 in Stromversorgungspfade 102, 102a, 102b einerseits und Signalpfade 103, 103a, 103b andererseits aufspalten. Dies erlaubt es, die Stromversorgung der Empfangsantennen 12a, 12b einerseits und die von den Empfangsantennen 12a, 12b bereitgestellten Signale andererseits voneinander getrennt zu manipulieren. Hierzu führen der erste Antennenanschluss 120a im Empfangsmodul 11 zu einem ersten Eingangs-Trennelement 16a und der zweite Antennenanschluss 120b im Empfangsmodul 11 zu einem zweiten Eingangs-Trennelement 16b. Der Positionsbestimmungsmodulanschluss 101 führt in dem Empfangsmodul 11 zu einem Ausgangs-Trennelement 13. Die antennenseitigen Trennelemente 16a und 16b werden hier als Eingangs-Trennelemente bezeichnet. Der Ausdruck "Eingang" bezieht sich hierbei also auf den Antenneneingang. Diese Trennelemente könnten auch Ausgangs-Trennelement heißen, wenn man den Fluss des Versorgungsstromes betonen würde, wenn es also um den Versorgungsstrom-Ausgang ginge. Das Positionsbestimmungsmodul-seitige Trennelement 13 wird vorliegend entsprechend als Ausgangs-Trennelement bezeichnet.

Alle drei Trennelemente 13, 16a, 16b sind jeweils als ein Bias-Tee ausgeführt, bestehend aus einem Kondensator und einer Spule. Die Trennelemente 13, 16a, 16b sind in Richtung der Signalpfade 103, 103a, 103b als Hochpassfilter und in Richtung der Stromversorgungspfade 102, 102a, 102b als Tiefpassfilter verwirklicht. Bei den Signalpfaden 103, 103a, 103b handelt es somit um Hochfrequenzpfade, entlang derer die tatsächlichen informationstragenden GNSS-Signale geleitet werden. Demgegenüber handelt es sich bei den Stromversorgungspfaden 102, 102a, 102b um Gleichstrompfade, über welche die Empfangsantennen 12a, 12b mit Strom versorgt werden.

Ein erster Stromversorgungspfad 102a führt von dem ersten Eingangs-Trennelement 16a zu einem ersten Eingang eines Umschalters 14, während ein zweiter Stromversorgungspfad 102b von dem zweiten Eingangs-Trennelement 16b zu einem zweiten Eingang des Umschalters 14 führt. Vom Ausgang des Umschalters 14 führt ein hier mit dem Bezugszeichen 102 gekennzeichneter Abschnitt des Stromversorgungspfades zu dem Ausgangs-Trennelement 13. Über eine eigene Stromversorgungsleitung 14a erhält der Umschalter 14 selbst einen Versorgungsstrom aus dem Positionsbestimmungsmodul 10. Der Umschalter 14 schaltet zeitlich abwechselnd den Versorgungstrom, welches das Positionsbestimmungsmodul 10 am Positionsbestimmungsmodulanschluss 101 bereitstellt, auf den ersten Stromversorgungspfad 102a und den zweiten Stromversorgungspfad 102b, so dass die erste Empfangsantenne 12a während einer ersten Schaltphase und die zweite Empfangsantenne 12b während einer zweiten Schaltphase mit dem Versorgungsstrom versorgt wird.

Ein erster Signalpfad 103a führt von dem ersten Eingangs-Trennelement 16a zu einem ersten Eingang eines Signalkombinierers 15, während ein zweiter Signalpfad 103b von dem zweiten Eingangs-Trennelement 16b zu einem zweiten Eingang des Signalkombinierers 14 führt. Aufgrund der abwechselnden Versorgung der Empfangsantennen 12a, 12b mit Versorgungsstrom über den Umschalter 14, erzeugt die erste Empfangsantenne 12a nur während der ersten Schaltphase das erste Signal, während die zweite Empfangsantenne 12b nur während der zweiten Schaltphase das zweite Signal erzeugt. Dieser Sachverhalt wird in der Fig. 3b im linken Signaldiagram schematisch veranschaulicht. Das obere Signaldiagramm ("Eingang 1") zeigt das über den ersten Signalpfad 103a zum ersten Eingang des Signalkombinierers 15 geleitete Signal. Das untere Signaldiagramm ("Eingang 2") zeigt das über den zweiten Signalpfad 103b zum zweiten Eingang des Signalkombinierers 15 geleitete Signal.

Der Signalkombinierer 15 ist in diesem Fall ein Summierer, der die beiden an seinen beiden Eingängen anliegenden Signale miteinander summiert. Am Ausgang des Signalkombinierers 15 wird dann über den gemeinsamen Signalpfad 103 das Gesamtsignal ausgegeben, welches im rechten Signaldiagramm der Fig. 3b schematisch dargestellt ist.

An dem ersten Stromversorgungspfad 102a und an dem zweiten Stromversorgungspfad 102b ist jeweils ein Kondensator C1 parallel angeschlossen. Die Kondensatoren C1 dienen als elektrische Speicher für die jeweiligen Empfangsantennen 16a, 16b, um die Schaltzeit teilweise oder vollständig zu überbrücken, in der sie vom Umschalter keinen Versorgungsstrom erhalten. Während der jeweiligen Schaltphasen, in der im Stromversorgungspfad 102a, 102b Strom fließt, wird der entsprechende Kondensator C1 teilweise oder vollständig geladen. Um Stromspitzen während des Lade- und/oder Entladevorgangs zu vermeiden, ist zwischen jedem Kondensator C1 und dem entsprechenden Eingang des Umschalters 14 ein Widerstand R1 mit geeignetem Widerstandswert angeordnet.

Fig. 4a zeigt den Aufbau eines Empfangsmoduls 11 gemäß einer zweiten bevorzugten Ausführungsform. Alle hier gezeigten Komponenten mit gleichen Bezugszeichen weisen auch die gleiche Funktionsweise auf, wie vorangehend im Zusammenhang mit der Fig. 3a beschrieben. In den Signalpfaden 103a, 103b ist vor dem Signalkombinierer 15 ein Duplizierer 17 angeordnet, der das erste Signal und das zweite Signal jeweils separat dupliziert und an den Eingang des Signalkombinierers 15 leitet. Der Duplizierer 17 lässt für jedes der beiden Signale jeweils in der ersten Schaltphase amplitudenmäßig einen ersten Signalanteil passieren und verzögert den zweiten Signalanteil die erste Schaltphase, um sie dann während der zweiten Schaltphase auszugeben. Vorliegend sind die beiden Schaltphasen des Umschalters 14 gleich lang, so dass von einem Umschalten mit einer Taktfrequenz gesprochen werden kann. In diesem Fall kann das Verhalten des Duplizierers 17 so beschrieben werden, dass beispielsweise beim ersten Signal das Signal mit dem halben Stromwert während der ersten Takthälfte ohne Verzerrung weitergeleitet wird. Während dieser ersten Takthälfte wird die andere Hälfte des Stromes gespeichert, um dann während der zweiten Talkhälfte ausgegeben zu werden. Dies kommt einer Verdoppelung des ersten Signals entlang der Zeitachse gleich, wobei die Signalstärke, das heißt die Stromstärke, entsprechend halbiert ist. Entsprechend wird das zweite Signal bearbeitet.

Das Ergebnis ist in den beiden linken Signaldiagrammen in der Fig. 4b zu sehen. Das obere Signaldiagramm zeigt den zeitlichen Verlauf des duplizierten ersten Signals, während das untere Signaldiagramm den zeitlichen Verlauf des duplizierten zweiten Signals zeigt. Im Vergleich zu den Signaldiagrammen in der Fig. 3b links ist zu erkennen, dass die rechteckförmig dargestellten Signalabschnitte verdoppelt sind und nun die Signale keine Lücken mehr aufweisen. Dafür sind die Signale nur noch halb so hoch. Diese duplizierten Signale werden nun an den Signalkombinierer 15 geleitet, der wie in der Ausführungsform aus der Fig. 3a als Summierer ausgebildet ist. An seinem Ausgang erzeugt dieser ein Gesamtsignal, wie er in dem rechten Signaldiagramm in der Fig. 4b schematisch dargestellt wird. Das Gesamtsignal hat in etwa die gleiche Signalstärke wie das in Fig. 3b gezeigte Gesamtsignal. Allerdings sind im Gesamtsignal aus der Fig. 4b zu jedem Zeitpunkt beide Signale anteilig enthalten.

Wie in der Fig. 4a dargestellt, wird auch der Duplizierer 17 über den Positionsbestimmungsmodulanschluss 101 mit Strom versorgt, den er über eine zusätzliche Induktanz oder Spule als Gleichstromanteil heraustrennt. Vorangehend wurde der Duplizierer 17 als eigenständiges Modul beschrieben, welcher dem Signalkombinierer 15 vorangestellt ist. Der Signalkombinierer 15 ist dafür sowohl in dem Empfangsmodul 11 gemäß Fig. 3a, als auch im Empfangsmodul 11 gemäß Fig. 4a identisch aufgebaut. Alternativ kann davon gesprochen werden, dass das Empfangsmodul 11 gemäß Fig. 3a einen Signalkombinierer 15 aufweist, welcher eine Aneinanderreihung des ersten und des zweiten Signals verursacht, während hingegen ein aus dem Signalkombinierer 15 und dem Duplizierer 17 zusammengesetzter alternativer Signalkombinierer 15/17 eine Überlagerung des ersten mit dem zweiten Signal erzeugt.

### Bezugszeichenliste:

- 10: Positionsbestimmungsmodul
- 101: Positionsbestimmungsmodulanschluss
- 102: Stromversorgungspfad
- 102a: erster Stromversorgungspfad
- 102b: zweiter Stromversorgungspfad
- 103: Signalpfad
- 103a: erster Signalpfad
- 103b: zweiter Signalpfad
- 11: Empfangsmodul
- 12a: erste Empfangsantenne
- 120a: erster Antennenanschluss
- 12b: zweite Empfangsantenne
- 120b: zweiter Antennenanschluss
- 13: Ausgangs-Trennelement
- 14: Umschalter
- 14a: Stromversorgungsleitung für Umschalter 14
- 15: Signalkombinierer
- 16a: erstes Eingangs-Trennelement
- 16b: zweites Eingangs-Trennelement
- 17: Duplizierer
- 20: Prozessor der On-board Unit 100
- 21: Stromversorgungsanschluss der On-board Unit 100
- 31: Beschleunigungssensor
- 36: Verbindungsleitung zum Beschleunigungssensor
- 37: Anschluss für Signal von Tachograph
- 40: Mobilfunk-Kommunikationseinheit
- 41: Mobilfunk-Antenne
- 100: On-Board Unit (OBU)
- 200: Fahrzeug

## Patentansprüche

1. Empfangsmodul (11) für eine ein Positionsbestimmungsmodul (10), eine erste Empfangsantenne (12a) und wenigstens eine zweite Empfangsantenne (12b) umfassende Positionsbestimmungseinrichtung (100) aufweisend:
- einen ersten Antennenanschluss (120a) für den Eingang eines ersten Signals der ersten Empfangsantenne (12a),
- wenigstens einen zweiten Antennenanschluss (120b) für den Eingang wenigstens eines zweiten Signals wenigstens der zweiten Empfangsantenne (12b),
- einen Positionsbestimmungsmodulanschluss (101) für den Ausgang eines Gesamtsignals an das Positionsbestimmungsmodul (10),
- einen Umschalter (14), welcher ausgebildet ist, einen am Positionsbestimmungsmodulanschluss (101) bereitgestellten Versorgungsstrom jeweils zeitlich abwechselnd in einer ersten Schaltphase über einen ersten Stromversorgungspfad (102a) dem ersten Antennenanschluss (120a) und in einer zweiten Schaltphase über einen zweiten Stromversorgungspfad (102b) dem zweiten Antennenanschluss (120b) bereit zu stellen, und
- einen Signalkombinierer (15), welcher ausgebildet ist, aus dem ersten Signal und dem zweiten Signal das Gesamtsignal zu erzeugen, und
**gekennzeichnet durch**
- elektrische Speicher (C1), welche jeweils in den ersten Stromversorgungspfad (102a) und zweiten Stromversorgungspfad (102b) angeordnet und ausgebildet sind, zumindest in der ersten Schaltphase wenigstens dem zweiten Antennenanschluss (120b) Strom bereitzustellen und zumindest in der zweiten Schaltphase wenigstens dem ersten Antennenanschluss (120a) Strom bereitzustellen.

2. Empfangsmodul (11) nach Anspruch 1, **gekennzeichnet durch**:
- ein mit dem ersten Antennenanschluss (120a) verbundenes erstes Eingangs-Trennelement (16a),
- ein mit dem zweiten Antennenanschluss (120b) verbundenes zweites Eingangs-Trennelement (16b) und
- ein mit dem Positionsbestimmungsmodulanschluss (101) verbundenes Ausgangs-Trennelement (13),
wobei das erste Eingangs-Trennelement (16a) und das zweite Eingangs-Trennelement (16b) zusammen mit dem Ausgangs-Trennelement (13)
- den ersten Stromversorgungspfad (102a) und den zweiten Stromversorgungspfad (102b) zum Leiten des Versorgungsstroms von dem Positionsbestimmungsmodulanschluss (101) über den Umschalter (14) zu dem ersten Antennenanschluss (120a) und dem zweiten Antennenanschluss (120b) und
- Signalpfade (103, 103a, 103b) zum Leiten der Signale von dem ersten Antennenanschluss (120a) und dem zweiten Antennenanschluss (120b) zum Signalkombinierer (15) und von dem Signalkombinierer (15) zu dem Positionsbestimmungsmodulanschluss (101) ausbilden.

3. Empfangsmodul (11) nach Anspruch 1, **dadurch gekennzeichnet, dass** das erste Eingangs-Trennelement (16a), das zweite Eingangs-Trennelement (16b) und/oder das Ausgangs-Trennelement (13) als Bias-Tee ausgebildet sind/ist.

4. Empfangsmodul (11) nach einem der vorangehenden Ansprüche, **dadurch gekennzeichnet, dass** die Stromversorgungspfade (102a, 102b) als Gleichstrompfade und/oder die Signalpfade (103, 103a, 103b) als Hochfrequenzpfade ausgebildet sind.

5. Empfangsmodul (11) nach einem der vorangehenden Ansprüche, **dadurch gekennzeichnet, dass** der Signalkombinierer (15) einen Signalsummierer umfasst.

6. Empfangsmodul (11) nach einem der vorangehenden Ansprüche, **dadurch gekennzeichnet, dass** der Signalkombinierer (15) ausgebildet ist, das Gesamtsignal derart zu erzeugen, dass in dem Gesamtsignal aufeinanderfolgende Zeitabschnitte abwechselnd jeweils nur entweder das erste Signal oder das zweite Signal enthalten.

7. Empfangsmodul (11) nach einem der Ansprüche 1 bis 5, **dadurch gekennzeichnet, dass** der Signalkombinierer (15) ausgebildet ist, das Gesamtsignal derart zu erzeugen, dass in dem Gesamtsignal ein Zeitabschnitt eine Summe aus dem ersten Signal und dem zweiten Signal enthält.

8. Empfangsmodul (11) nach einem der vorangehenden Ansprüche, **dadurch gekennzeichnet, dass** der Umschalter (14) ausgebildet ist, den Versorgungsstrom mit einer vorgegebenen Wechselfrequenz zeitlich abwechselnd über den ersten Antennenanschluss (120a) der ersten Empfangsantenne (12a) und über den zweiten Antennenanschluss (120b) der zweiten Empfangsantenne (12b) zur Verfügung zu stellen.

9. Empfangsmodul (11) nach einem der vorangehenden Ansprüche, **dadurch gekennzeichnet, dass** der erste Antennenanschluss (120a), der zweite Antennenanschluss (120b) und/oder der Positionsbestimmungsmodulanschluss (101) als Koaxialanschlüsse ausgebildet sind.

10. Positionsbestimmungseinrichtung (100) zur Positionsbestimmung mittels eines globalen Navigationssatellitensystems, aufweisend
- ein Empfangsmodul (11) gemäß einem der vorangehenden Ansprüche,
- ein mit dem Positionsbestimmungsmodulanschluss (101) des Empfangsmoduls (11) verbundenes Positionsbestimmungsmodul (10), welches ausgebildet ist, mittels Auswertung des Gesamtsignals eine geographische Position zu bestimmen,
- eine mit dem ersten Antennenanschluss (120a) des Empfangsmoduls (11) verbundene erste Empfangsantenne (12a) zum Empfang von Navigationssatellitensignalen und
- eine mit dem zweiten Antennenanschluss (120b) des Empfangsmoduls (11) verbundene zweite Empfangsantenne (12b) zum Empfang von Navigationssatellitensignalen.

11. Fahrzeug (200) mit einer Positionsbestimmungseinrichtung (100) nach Anspruch 10, wobei die erste Empfangsantenne (12a) und die zweite Empfangsantenne (12b) derart am Fahrzeug (200) angeordnet sind, dass sich ein den räumlichen Empfangsbereich der ersten Empfangsantenne (12a) und/oder der zweiten Empfangsantenne (12b) einschränkendes Fahrzeugelement zwischen der ersten Empfangsantenne (12a) und der zweiten Empfangsantenne (12b) befindet.

## Claims

1. A receiving module (11) for a position determining means (100) including a position determining module (10), a first receiving antenna (12a) and at least one second receiving antenna (12b), comprising:
- a first antenna connection (120a) for the input of a first signal of the first receiving antenna (12a),
- at least one second antenna connection (120b) for the input of at least one second signal of at least the second reception antenna (12b),
- a position determination module connection (101) for the output of a total signal to the position determination module (10),
- a changeover switch (14) which is designed to provide a supply current provided at the position determination module connection (101) respectively temporarily alternating in a first switching phase via a first power supply path (102a) to the first antenna connection (120a) and in a second switching phase via a second power supply path (102b) to the second antenna connection (120b), and
- a signal combiner (15) which is designed to generate the total signal from the first signal and the second signal, and **characterized by**
- electrical memories (C1) which are each arranged in the first power supply path (102a) and the second power supply path (102b) and designed to provide power to at least the second antenna connection (120b) at least in the first switching phase and provide power to at least the first antenna connection (120a) at least in the second switching phase.

2. The receiving module (11) according to claim 1, **characterized by**:
- a first input separating element (16a) connected to the first antenna connection (120a),
- a second input separating element (16b) connected to the second antenna connection (120b), and
- an output separating element (13) connected to the position determining module connection (101), wherein the first input separating element (16a) and the second input separating element (16b) together with the output separating element (13) form
- the first power supply path (102a) and the second power supply path (102b) for conducting the supply current from the position determining module connection (101) via the changeover switch (14) to the first antenna connection (120a) and the second antenna connection (120b), and
- signal paths (103, 103a, 103b) for conducting the signals from the first antenna connection (120a) and the second antenna connection (120b) to the signal combiner (15) and from the signal combiner (15) to the positioning determination module connection (101).

3. The receiving module (11) according to claim 1, **characterized in that** the first input separating element (16a), the second input separating element (16b) and/or the output separating element (13) is/are formed as bias tea.

4. The receiving module (11) according to one of the preceding claims, **characterized in that** the power supply paths (102a, 102b) are designed as DC paths and/or the signal paths (103, 103a, 103b) are designed as high-frequency paths.

5. The receiving module (11) according to one of the preceding claims, **characterized in that** the signal combiner (15) comprises a signal summer.

6. The receiving module (11) according to one of the preceding claims, **characterized in that** the signal combiner (15) is designed to generate the total signal such that in the total signal successive periods of time alternately each contain only either the first signal or the second signal.

7. The receiving module (11) according to one of claims 1 to 5, **characterized in that** the signal combiner (15) is designed to generate the total signal such that in the total signal a period of time contains a sum of the first signal and the second signal.

8. The receiving module (11) according to one of the preceding claims, **characterized in that** the changeover switch (14) is designed to provide the supply current at a predetermined alternating frequency alternately over time via the first antenna connection (120a) of the first receiving antenna (12a) and via the second antenna connection (120b) of the second receiving antenna (12b).

9. The receiving module (11) according to one of the preceding claims, **characterized in that** the first antenna connection (120a), the second antenna connection (120b) and/or the position determination module connection (101) are designed as coaxial connections.

10. A position determining device (100) for position determination by means of a global navigation satellite system, comprising
- a receiving module (11) according to one of the preceding claims,
- a position determination module (10) connected to the position determination module connection (101) of the receiving module (11), which is designed to determine a geographical position by means of evaluation of the total signal,
- a first receiving antenna (12a) for receiving navigation satellite signals, connected to the first antenna connection (120a) of the receiving module (11) and
- a second receiving antenna (12b) for receiving navigation satellite signals, connected to the second antenna connection (120b) of the receiving module (11).

11. A vehicle (200) having position determining means (100) according to claim 10, wherein the first receiving antenna (12a) and the second receiving antenna (12b) are arranged at the vehicle (200) such that a vehicle element restricting the spatial receiving range of the first receiving antenna (12a) and/or the second receiving antenna (12b) is located between the first receiving antenna (12a) and the second receiving antenna (12b).

## Revendications

1. Un module de réception (11) pour un moyen de détermination de position (100) contenant un module de détermination de position (10), une première antenne de réception (12a) et au moins une deuxième antenne de réception (12b), comprenant
- une première borne d'antenne (120a) pour l'entrée d'un premier signal de la première antenne de réception (12a),
- au moins une deuxième borne d'antenne (120b) pour l'entrée d'au moins un deuxième signal d'au moins la deuxième antenne de réception (12b),
- une borne de module de détermination de position (101) pour la sortie d'un signal total vers le module de détermination de position (10),
- un commutateur (14) qui est conçu pour fournir un courant d'alimentation fourni à la borne de module de détermination de position (101) en alternance dans le temps dans une première phase de commutation via un premier chemin d'alimentation (102a) à la première borne d'antenne (120a) et dans une deuxième phase de commutation via un deuxième chemin d'alimentation (102b) à la deuxième borne d'antenne (120b), et
- un combineur de signaux (15) qui est conçu pour générer le signal total à partir du premier signal et du deuxième signal, et **caractérisé par**
- des mémoires électriques (C1), chacune agencée dans le premier chemin d'alimentation (102a) et dans le deuxième chemin d'alimentation (102b) et conçue de fournir de l'énergie au moins dans la première phase de commutation vers au moins la deuxième borne d'antenne (120b) et au moins dans la deuxième phase de commutation vers au moins la première borne d'antenne (120a).

2. Le module de réception (11) selon la revendication 1, **caractérisé par** :
- un premier élément de séparation d'entrée (16a) connecté à la première borne d'antenne (120a),
- un deuxième élément de séparation d'entrée (16b) connecté à la deuxième borne d'antenne (120b), et
- un élément de séparation de sortie (13) connecté à la borne de module de détermination de position (101),
le premier élément de séparation d'entrée (16a) et le deuxième élément de séparation d'entrée (16b) ainsi que l'élément de séparation de sortie (13) configurant
- le premier chemin d'alimentation (102a) et le deuxième chemin d'alimentation (102b) pour acheminer le courant d'alimentation depuis la borne de module de détermination de position (101) via le commutateur (14) jusqu'à la première borne d'antenne (120a) et la deuxième borne d'antenne (120b), et
- des chemins de signal (103, 103a, 103b) pour acheminer les signaux de la première borne d'antenne (120a) et la deuxième borne d'antenne (120b) au combineur de signaux (15) et du combineur de signaux (15) à la borne de module de détermination de positionnement (101).

3. Le module de réception (11) selon la revendication 1, **caractérisé en ce que** le premier élément de séparation d'entrée (16a), le deuxième élément de séparation d'entrée (16b) et/ou l'élément de séparation de sortie (13) est/sont formés de manière polarisée.

4. Le module de réception (11) selon l'une des revendications précédentes, **caractérisé en ce que** les chemins d'alimentation (102a, 102b) sont conçus en tant que chemins en courant continu et/ou les chemins de signaux (103, 103a, 103b) sont conçus en tant que chemins haute fréquence.

5. Le module de réception (11) selon l'une des revendications précédentes, **caractérisé en ce que** le combineur de signaux (15) comprend un sommateur de signaux.

6. Le module de réception (11) selon l'une des revendications précédentes, **caractérisé en ce que** le combineur de signaux (15) est conçu pour générer le signal total de sorte que dans le signal total des périodes de temps se succédant contiennent respectivement en alternance soit le premier signal, soit le deuxième signal.

7. Le module de réception (11) selon l'une des revendications 1 à 5, **caractérisé en ce que** le combineur de signaux (15) est conçu pour générer le signal total de sorte que dans le signal total une période de temps contienne une somme du premier signal et du deuxième signal.

8. Le module de réception (11) selon l'une des revendications précédentes, **caractérisé en ce que** le commutateur (14) est conçu de fournir le courant d'alimentation à une fréquence alternative prédéterminée alternant dans le temps via la première borne d'antenne (120a) de la première antenne de réception (12a) et via la deuxième borne d'antenne (120b) de la deuxième antenne de réception (12b).

9. Le module de réception (11) selon l'une des revendications précédentes, **caractérisé en ce que** la première borne d'antenne (120a), la deuxième borne d'antenne (120b) et/ou la borne de module de détermination de position (101) sont conçues en tant que bornes coaxiales.

10. Un dispositif de détermination de position (100) pour la détermination de position au moyen d'un système de navigation globale par satellite, comprenant :
- un module de réception (11) selon l'une des revendications précédentes,
- un module de détermination de position (10) connecté à la borne de module de détermination de position (101) du module de réception (11) qui est conçu à déterminer une position géographique au moyen d'une évaluation du signal total,
- une première antenne de réception (12a) pour recevoir des signaux de satellites de navigation qui est connectée à la première borne d'antenne (120a) du module de réception (11) et
- une deuxième antenne de réception (12b) pour recevoir des signaux du satellite de navigation qui est connectée à la deuxième borne d'antenne (120b) du module de réception (11).

11. Un véhicule (200) ayant un dispositif de détermination de position (100) selon la revendication 10, dans lequel la première antenne de réception (12a) et la deuxième antenne de réception (12b) sont agencées au le véhicule (200) de sorte qu'un élément de véhicule qui restreint la plage de réception spatiale de la première antenne de réception (12a) et/ou la deuxième antenne de réception (12b) est situé entre la première antenne de réception (12a) et la deuxième antenne de réception (12b).
